# EUROPEAN PATENT APPLICATION

(11) **EP 4 773 503 A1**
(43) Date of publication of application: **08.07.2026**
(21) Application number: 25383481.6
(22) Date of filing: 19.12.2025
(51) Int. Cl.: H02S 50/15

(54) **METHOD AND SYSTEM FOR INSPECTING PHOTOVOLTAIC POWER GENERATION PLANTS**

(30) Priority: 03.01.2025 ES 202530002
(71) Applicant: Arborea Intellbird SL, 37185 Villamayor (Salamanca) (ES)
(72) Inventor: BERNABEU, Carlos, 37185 Villamayor (ES)

(57) **Abstract**

Inspection of photovoltaic power generation plants is carried out using an unmanned ground vehicle (1) in autonomous mode. The vehicle travels a route inspecting rows of photovoltaic panels (3, 4) and simultaneously acquiring data from the underside of the panels in one row (3) and the front of the panels in the adjacent row (4) using inspection devices (2) located on either side of the vehicle (1). The acquired data is processed in a central control unit, which can send alert messages to an external entity to report any anomalies. If conditions are unsuitable for conducting an inspection, the vehicle can clear vegetation from the plant site.

## Description

### Technical Field

The present invention relates to the field of unmanned vehicles and refers to a method for inspecting photovoltaic power generation plants, implemented by means of a system comprising an unmanned ground vehicle (1) and a central control unit.

### Background

Photovoltaic power generation plants (solar power plants or photovoltaic power plants) are an established means of generating renewable energy. Continuous inspection of these infrastructures is necessary to prevent fires and maximise their performance.

Systems for inspecting photovoltaic panels using drones are known, for example US2023133036A1, "Photovoltaic panel management method" (KUKDONG ENERGY CORP), 4 May 2023. Although tasks are carried out in relatively small areas, drones suffer from limited autonomy, since the aircraft must perform complex manoeuvres, maintain hovering flight, acquire data (for example photographs or video) or, in some cases, process them onboard, all of which consumes a large amount of energy. In addition, drones are only capable of inspecting the front side of the panels. However, verification of the underside is crucial, since problematic elements are located there.

ES 1303669 U, "System for robotic inspection of photovoltaic parks" (ARBOREA INTELLBIRD SL), 13 October 2023, describes a ground vehicle configured to inspect photovoltaic power plants, provided with one or more cameras capable of acquiring data from the front side of a row of panels and simultaneously from the underside of the adjacent row of panels.

US 2024195354 A1, "Machines and methods for monitoring photovoltaic systems" (DEREK CHASE et al.), 13 June 2024, describes a ground vehicle configured to inspect photovoltaic parks, provided with one or more cameras, which may be mounted on a rotating head, capable of acquiring data from the front side of a row of panels, but not simultaneously from the underside of the adjacent row of panels.

The vehicle of the present invention, capable of acquiring data simultaneously from two rows of solar panels, is further configured to carry out a method that offers inspection managers possibilities not available in the prior art, such as initiating an inspection operation only if suitable conditions have been determined, receiving anomaly alert messages and inspection reports.

### Summary of the invention

In a first aspect, the subject matter of the invention is a method for inspecting photovoltaic power generation plants implemented by means of an unmanned ground vehicle (1), without intervention by a human pilot and under the control of the electronic controller of the vehicle (1) and a central control unit located onboard the vehicle (1) or externally thereto, the method comprising the steps of:
a. Processing information selected from a group composed of environmental conditions, solar event alerts, plant operability notices and plant operation record, or combinations thereof, resulting in a determination that conditions for performing the inspection are suitable or are not suitable.
b. If it is determined that the conditions for performing an inspection are suitable, start an inspection operation.
c. The unmanned ground vehicle (1) moving through the photovoltaic power generation plant, the vehicle (1) being configured to simultaneously acquire data from the front side of the photovoltaic panels of a row of panels (3) and from the underside of the panels of the adjacent row (4).
d. Processing the acquired data, including determining whether anomalies exist in the photovoltaic panels, which comprises at least one of the following determinations: that the average temperature of at least one pixel of a thermographic image of a photovoltaic panel and its associated elements exceeds the average temperature of said thermographic image; that a hot spot exists; or that a visible anomaly exists.
e. If an anomaly in the photovoltaic panels is detected, classify it by the central control unit by assigning a risk level within a predefined risk scale, and the central control unit sending an alert message to an external entity, the message comprising information on the nature and location of the detected anomaly.

In an embodiment, if the processing of step a) has determined that the conditions for performing an inspection are not suitable, the method comprises the additional step of determining whether, according to the same information, the conditions are suitable to carry out a brush clearing operation and if they are, the method comprises starting such an operation.

In an embodiment, if the conditions for carrying out a brush clearing operation are not suitable, the vehicle remains at its base, continuing processing until it is determined that the conditions for an inspection or brush clearing are suitable and proceeding to carry out the corresponding task.

In an embodiment, the inspection report is generated in the central control unit or in a computer application, in the latter case the method includes the step of the central control unit previously sending to the computer application an encoded file with the data acquired during the inspection.

In an embodiment, when the vehicle (1) is acquiring data, it continues to receive information from public or private entities and/or capture and process information about environmental conditions with its sensors. If the conditions for continuing data acquisition become unsuitable, the operation is interrupted.

In a second aspect, the invention relates to an inspection system for photovoltaic power generation plants, which comprises an unmanned ground vehicle (1) and a central control unit configured to execute the method of claim 1.

In one embodiment, the unmanned ground vehicle (1) with which the method is implemented is configured to acquire data from the underside of a row of photovoltaic panels (3) of the generation plant and simultaneously from the front side of an adjacent row of panels (4), by means of at least one inspection device (2) located on each side of the vehicle (1), said inspection device (2) integrating selected elements from a group consisting of a thermal imaging camera, a visible spectrum camera, and combinations thereof.

In an embodiment, the unmanned ground vehicle (1) comprises means to perform brush clearing operations.

In one embodiment, the system further comprises a computer application configured to communicate with the central control unit and with external entities and to process the encoded files received from the central control unit and generate inspection reports.

### Brief description of drawings

To complement the description, a set of drawings is included, which, for illustrative and non-limiting purposes, represent the following:
Fig. 1: Diagram of the steps of the method for inspecting photovoltaic power generation plants, in an embodiment where the unmanned ground vehicle operates in autonomous mode.
Fig. 2: Schematic representation of an unmanned ground vehicle moving between two rows of panels in a photovoltaic plant.

### Description of embodiments

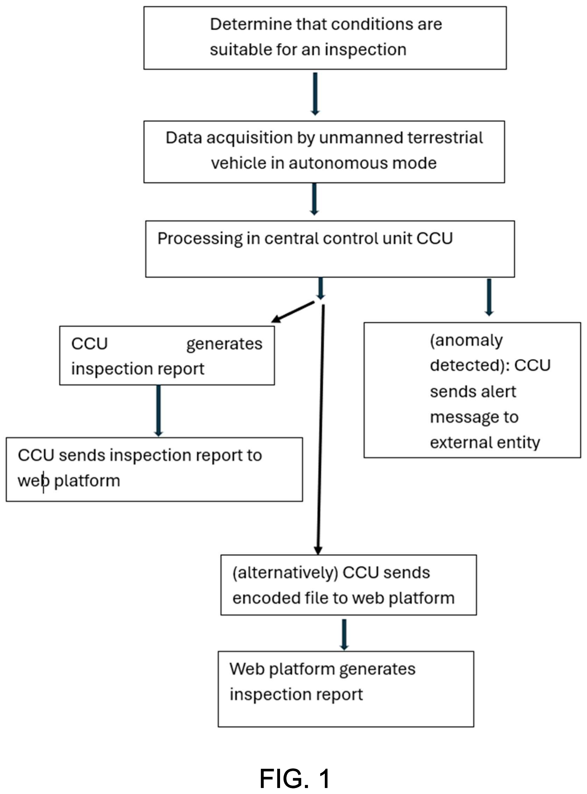

In a first aspect, the subject matter of the invention is a method for inspecting photovoltaic power generation plants implemented by means of an unmanned ground vehicle (1) operating autonomously, without human intervention, following a pre-programmed route in its electronic controller. Figure 1 illustrates the steps of the method with a diagram.

The first phase is to determine if the inspection conditions are suitable. The electronic controller of the unmanned ground vehicle (1) is programmed to start the vehicle (1) and carry out an inspection tour whenever conditions are suitable. To determine if the inspection conditions are suitable, environmental parameters are considered, given that thermal anomalies in the panels cannot be detected under conditions of low solar irradiance. Parameters related to space weather are also considered, specifically solar events such as coronal mass ejections, which affect the quality of the satellite signal used for positioning the vehicle (1). If this signal is deficient, it could cause inaccurate georeferencing of the vehicle and the anomalies it detects. Another parameter is that the plant must be in production, which is not the case, for example, when the national electricity grid operator has ordered a production curtailment. A further parameter is the record of operations carried out at the plant. This record may include both inspection operations and brush clearing operations in the land occupied by the photovoltaic plant.

For the purposes described, in one embodiment the vehicle (1) is configured to receive and process information from public or private entities, including information on environmental conditions, for example, weather reports; solar event alerts; and plant operational information, for example, production curtailment alerts. The vehicle (1) can receive the alerts via satellite communication or access the repositories where they are stored by connecting its automatic communication systems to internet servers.

In another embodiment, regarding the aforementioned environmental conditions, instead of receiving information, or in addition to it, the vehicle (1) is equipped with sensors for capturing environmental conditions and configured to process the information received.

The second step is implemented if the conditions for conducting the inspection have been deemed suitable. This phase involves data acquisition by the unmanned ground vehicle (1) during its autonomous route through the photovoltaic power plant. This data may include thermographic images, photographs, and videos. It should be understood that data collection focuses not only on the photovoltaic panels themselves, but also on associated components such as wiring, clamps, and fuse holders, all of which are critical. Data on obstacles present along the route may also be collected.

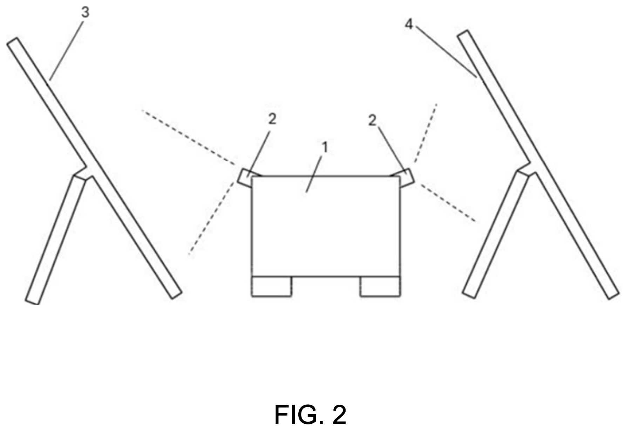

As shown in Fig. 2, on the sections of its route that run between two rows of photovoltaic panels, the vehicle (1) will simultaneously capture data from the underside of one row (3) and the front side of the adjacent row (4). This represents a considerable saving in the time required to perform the inspection. Furthermore, verifying the back of the panels allows for more precise detection of thermal anomalies, as well as anomalies in the components associated with the photovoltaic panels that are shielded from the front, such as the aforementioned cables, clips, or fuse holders.

During the second phase of the method, when the vehicle (1) is acquiring data, it continues to receive information from public or private entities and/or capture and process information about environmental conditions with its sensors. If, according to pre-programmed parameters, the conditions for continuing data acquisition become unsuitable, the operation is interrupted.

In an embodiment, the next stage of the method is the processing of the data acquired during the inspection. This processing includes determining whether anomalies exist in the photovoltaic panels or their associated components, which comprises at least one of the following determinations: that the average temperature of at least one pixel in the thermographic images taken during the inspection is higher than the average temperature of its surroundings; that the temperature measured in a pixel defines a hot spot, that is, it exceeds the average temperature of the entire panel and its associated components plus a predetermined value, thus reaching what is called a maximum delta or risk level; or that a visible anomaly exists, for example, a crack in a panel or breakage or wear of wiring, clips, fuse holders, or other components associated with the panels. The visible anomaly can be detected using machine vision technology, relying on a pre-existing database comprising classified images of various anomalies.

Data processing also includes determining whether there are obstacles on the terrain, both those that could prevent the vehicle's (1) progress and those that, while not necessarily impeding it, could still disrupt its trajectory, now or in the future (for example, tree saplings). Processing this data allows the central control unit to redesign the vehicle's (1) route in future operations.

The processing of this data will be carried out in a central control unit. In one embodiment, this unit is located within the vehicle (1) itself. In another embodiment, the central control unit is located externally to the vehicle (1), for example, in physical facilities under the control of the inspector. In this latter embodiment, the data captured during the inspection will be transmitted in raw form, as images and metadata, from the vehicle's electronic controller (1) to the external central control unit by any known means, for example, via satellite or telephone network.

If the data processing in the central control unit determines that one or more panel anomalies exist, the processing operation comprises classifying each anomaly by assigning a risk level, which in the case of thermal anomalies is based on the maximum delta that has been reached.

In one embodiment, the central control unit then sends an alert message to a predetermined external entity. An external entity is understood to be the owner of the photovoltaic plant, a subcontractor operating the plant, or a party designated by either of them as responsible for inspection tasks. The system can be configured to send the alert message to several such recipients. The alert message may include information about the nature of the detected anomaly (a thermal or visible anomaly in a photovoltaic panel or associated component), which may be accompanied by images or thermographic images; the location of the anomaly; and the assigned risk level. The anomaly's location can be determined using a file that allows for precise georeferencing, such as a KMZ file, which is generated from the position metadata obtained by the vehicle's (1) electronic controller by combining, for example, a GNSS system with RTK.

In one embodiment, an additional phase of the method consists of issuing an inspection report. This report will contain two files: one in PDF format containing a top-down image or vector plan of the photovoltaic plant, overlaid with icons indicating the position of panel anomalies and any obstacles detected on the ground. The report also includes an ordered and descriptive list of the anomalies and obstacles, along with the corresponding images or thermographic scans. A second file, in KMZ format, will allow the position of the anomalies and obstacles, as well as the associated thermal or visible images, to be referenced in a standard web browser.

In an embodiment, the inspection report is generated at the central control unit. Once generated, it is sent to a software application, which can be a web platform or hosted on any other device. Subsequent reports are archived in the software application, providing a record of incidents at the photovoltaic plant. The software application can be under the control of the person responsible for the inspection.

A web platform is understood to be software that is accessed via a web server through the internet or an intranet. This software is hosted on a remote computing device.

In another embodiment, the report is generated directly on the web platform. To this end, the central control unit will send an encoded file containing the data acquired during the inspection.

External entities have access to the web platform to view the report and interact with the inspection manager, but they cannot modify the report. Therefore, the report serves as an external and independent certification of the plant's condition at the time period covered by the report.

Since the external entity is responsible for resolving any anomalies detected during an inspection that were triggered by an alert and the corresponding report, once these issues are resolved, for example, by replacing a damaged photovoltaic panel, the external entity can notify the inspection manager through the web platform.

In an embodiment, if the processing performed to determine whether the conditions for carrying out an inspection are suitable determines that they are not, the method comprises the additional step of determining whether, based on the same processed information, the conditions are suitable for clearing the vegetation on the land occupied by the photovoltaic plant. If the conditions are determined to be suitable, the brush clearing operation begins.

If the conditions for carrying out a brush clearing operation are also unsuitable, the vehicle remains at its base, and the processing continues until it is determined that the conditions for an inspection or brush clearing are suitable, at which point the corresponding task is carried out.

In a second aspect, the subject matter of the invention is a system adapted to implement the method for inspecting photovoltaic power generation plants.

The system comprises an unmanned ground vehicle (1), known in the art, powered by at least one electric or internal combustion engine that transmits its energy to wheels or tracks. The vehicle (1) may include one or more bumpers on its front, rear, or side.

The vehicle (1) is equipped with an electronic controller. Within the photovoltaic plant enclosure there is a base for the vehicle (1), the base equipped with battery charging means.

The autonomous route is stored in the vehicle's (1) electronic controller. In one embodiment, the vehicle (1) integrates a set of sensors for detecting environmental conditions. These sensors, known in the art, can measure ambient temperature and humidity, precipitation, solar radiation, atmospheric pressure and wind, and are operationally connected to the vehicle's (1) electronic controller.

The vehicle (1) is preferably equipped with a satellite positioning system capable of connecting to various satellite networks, such as GPS, GLONASS, BeiDou, or GALILEO, and a basic obstacle detection and avoidance sensor. Additionally, the vehicle (1) can integrate a high-precision positioning system, for example, an RTK (Real-Time Kinematics) system, which can be combined with positioning beacons located within the photovoltaic plant site. Alternatively, real-time positioning systems using backup terrestrial antenna networks (GNSS) can be employed.

The unmanned ground vehicle (1) is configured to simultaneously capture data from the underside of one row of panels (3) and the front side of the adjacent row of panels (4) of the photovoltaic power generation plant. This includes not only the panels themselves but also associated components such as cables, clamps, and fuse holders. To this end, inspection devices (2) are preferably located on the upper sides of the vehicle (1). In a preferred embodiment, each inspection device comprises a thermal imaging camera and a visible spectrum camera. The optical focal angle of the inspection devices (2) is adapted to the characteristics of the plant, for example, the tilt angle of the panels (3, 4), thus enabling them to operate on movable panels.

In one embodiment, the vehicle (1) is equipped with an obstacle sensor operatively coupled to a front bumper, to divert the vehicle's trajectory if an obstacle is encountered. In one embodiment, the vehicle (1) is additionally equipped with an obstacle sensor located in a lower front position, that is, below the front bumper, at the level of the wheels or tracks. The purpose of this sensor is to detect low obstacles, such as small rocks or tree saplings, that do not completely block the vehicle's path but could disrupt it.

In one embodiment, the vehicle (1) includes means for mowing and clearing vegetation, as known in the art. These means provide the vehicle (1) with additional functionality, since, in addition to performing plant inspections, and when these are not possible due to prevailing conditions, the vehicle (1) can perform brush clearing operations, preventing excessive vegetation growth from obstructing the vehicle's (1) progress or creating fire hazards at the plant.

The inspection system comprises a central control unit, which is equipped with a processing and computing system configured to analyze images and data. In one embodiment, the central control unit is installed on board the vehicle (1). In another embodiment, it is located externally to the vehicle (1), in physical facilities that may be under the control of the person responsible for the inspection.

The central control unit, according to one embodiment, comprises the following components: at least one circuit integrating multi-core processors, a motherboard, RAM memory units, storage media, a graphics card configured to process large volumes of information in the form of images; a power supply, cooling means, and a communications system, for example, a router-based communication system with a SIM card. A person skilled in the art may, depending on foreseeable needs, configure this central control unit with equipment of varying capacity from those available in the prior art.

In the embodiment where the central control unit is located externally to the vehicle (1), the unit is configured to communicate with the vehicle (1). This bidirectional communication can be carried out using a low-latency communication protocol, for example, satellite communication or a 5G communication protocol.

In one embodiment, the system comprises a web platform configured to communicate with the central control unit and with external entities; and to, according to an embodiment of the described method, process the encoded files received from the central control unit and generate the corresponding inspection reports.

## Claims

1. Method for inspecting photovoltaic power generation plants implemented by means of an unmanned ground vehicle (1), without intervention by a human pilot and under the control of the electronic controller of the vehicle (1) and of a central control unit located onboard the vehicle (1) or externally thereto, the method comprising the steps of:
a. Processing information selected from a group composed of environmental conditions, solar event alerts, plant operability notices and plant operation record, or combinations thereof, resulting in a determination that conditions for performing the inspection are suitable or are not suitable,
b. if it is determined that the conditions for performing an inspection are suitable, start an inspection operation,
c. the unmanned ground vehicle (1) moving through the photovoltaic power generation plant, the vehicle (1) being configured to simultaneously acquire data from the front side of the photovoltaic panels of a row of panels (3) and from the underside side of the panels of the adjacent row (4),
d. processing the acquired data, including determining whether anomalies exist in the photovoltaic panels, which comprises at least one of the following determinations: that the average temperature of at least one pixel of a thermographic image of a photovoltaic panel and its associated elements exceeds the average temperature of said thermographic image; that a hot spot exists; or that a visible anomaly exists,
e. if an anomaly in the photovoltaic panels is detected, classify it by the central control unit by assigning a risk level within a predefined risk scale, and the central control unit sending an alert message to an external entity, the message comprising information on the nature and location of the detected anomaly.

2. Method for inspecting photovoltaic power generation plants according to claim 1, **characterized in that**, if the processing of step a) has determined that the conditions for performing an inspection are not suitable, the method comprises the additional step of determining whether, according to the same information, the conditions are suitable to carry out a brush clearing operation and if they are, the method comprises starting such an operation.

3. Method for inspecting photovoltaic power generation plants according to claim 2, **characterized in that**, if the conditions for carrying out a brush clearing operation are not suitable, the vehicle remains at its base, continuing processing until it is determined that the conditions for an inspection or brush clearing are suitable and proceeding to carry out the corresponding task.

4. Method for inspecting photovoltaic power generation plants according to claim 1, **characterized in that** the inspection report is generated in the central control unit or in a computer application, in the latter case the method including the step of the central control unit previously sending to the computer application an encoded file with the data acquired during the inspection.

5. Method for inspecting photovoltaic power generation plants according to claim 1, **characterized in that**, when the vehicle (1) is acquiring data, it continues to receive information from public or private entities and/or capture and process information about environmental conditions with its sensors; and **in that**, if the conditions for continuing data acquisition become unsuitable, the operation is interrupted.

6. System for inspecting photovoltaic power generation plants **characterized in that** it comprises an unmanned ground vehicle (1) and a central control unit configured to execute the method of claim 1.

7. System for inspecting photovoltaic power generation plants according to claim 6, **characterized in that** the ground vehicle (1) is configured to acquire data from the underside of a row of photovoltaic panels (3) of the generation plant and simultaneously from the front side of an adjacent row of panels (4), by means of at least one inspection device (2) located on each side of the vehicle (1), said inspection device (2) integrating selected elements from a group consisting of a thermal imaging camera, a visible spectrum camera, and combinations thereof.

8. System for inspecting photovoltaic power generation plants according to claim 6, **characterized in that** the unmanned ground vehicle (1) comprises means to perform brush clearing operations.

9. System for inspecting photovoltaic power generation plants according to claim 6, **characterized in that** it further comprises a computer application configured to communicate with the central control unit and with external entities and to process the encoded files received from the central control unit and generate inspection reports.
